# EUROPEAN PATENT APPLICATION

(11) **EP 0 875 686 A1**
(43) Date of publication of application: **04.11.1998**
(21) Application number: 98200943.3
(22) Date of filing: 25.03.1998
(51) Int. Cl.: F16C 35/067

(54) **Bearing system with improved press fit systems**

(30) Priority: 02.04.1997 NL 1005706
(71) Applicant: SKF Industrial Trading & Development Co, B.V., NL-3430 DT Nieuwegein (NL)
(72) Inventor: Olschewski, Armin Herbert Emil August, 3438 AC Nieuwegein (NL); De Vries, Alexander Jan Carel, 4003 KA Tiel (NL); Grün, Johann Peter, 3706 TH Zeist (NL)
(74) Representative: de Bruijn, Leendert C.

(57) **Abstract**

A bearing system comprises a rolling element bearing and at least two construction parts which are rotatably supported with respect to one another by means of the bearing, said bearing having an inner ring (5), an outer ring (4) and at least one series of rolling elements (6) accommodated between the raceways of said rings, the outer bearing ring (4) and the outer construction part (2) on the one hand, and/or the inner bearing ring (5) and the inner construction part (3) on the other hand being connected by means of mutual press fit surfaces. The press fit surfaces (7,9,8,10) have been treated by shot peening.

## Description

The invention is related to the field of rolling element bearing systems for use in an environment with relatively high loadings, such as wheel bearings for trucks and trains. Such bearings are usually mounted by a interference fit obtained press-fitting on a component of the vehicle in question. In the case of trucks, the inner bearing ring is press-fitted on a shaft; in the case of trains, the outer bearing ring is press-fitted in a bearing housing.

The bearings rings in question are fitted by exerting a force which is high enough to overcome the friction between the mating surfaces. As the fitting is an interference fit, in this process appreciable friction forces may develop which often lead to problems. One of the problems encountered in press-fitting of bearing rings is the formation of welding scratches or the phenomenon of cold welding. The problem is aggravated by the hardness differences between the mating surfaces. The surface of the bearing ring is usually much harder than the corresponding surface of the shaft or housing.

Attempts have been made to alleviate this problem, for instance by forming a spiral groove in one of the mating surfaces. This approach however did not yield satisfactory results. According to another approach, the softer component is hardened; in that case however, deformations occur as a result of the heating process involved in hardening. The hardened surface should therefore be reworked to restore the required dimensions which are necessary for an interference fit.

The object of the invention is therefore to provide a bearing system which does not show the problem of cold welding during press fitting. This object is achieved in that the press fit surfaces have been treated by shot peening.

The operation of shot peening procures a press fit surface with minor indentations, which indentations cause the generation of compressive stresses in the material underlying said surface. Moreover, the small indentations lead to a reduction in the friction forces as occur during the process of press-fitting. As a result, the phenomenon of cold welding during the sliding movement of the mating press fit surfaces is inhibited; nevertheless, the desired interference fit of the components in question can still be achieved.

Preferably, the surface topography of each press fit surface treated by shot peening is characterised by surface deformations of about 3 micron. For instance, the surface in question may exhibit indentations of 1-6 micron deep. Preferably, said indentations are 2-4 micron deep. More preferably said indentations are 2 micron deep.

Generally, it is sufficient in case only one of the press fit surfaces in each interference fit connection has been treated by shot peening. Nevertheless, good results are also obtained in case both press fit surfaces are treated.

The invention is furthermore related to a rolling element bearing comprising a inner ring, an outer ring ad at least one series of rolling elements accommodated between the raceways of said rings. Such rolling element bearing can of course be applied in the bearing system described before.

The invention is also related to a method for manufacturing a bearing ring for a rolling element bearing according as described before. According to the invention, a surface of said bearing ring is shot peened by using globular, regularly shaped particles having a smooth surface.

Shot peening by using such smoothly shaped particles, for instance ball shaped particles, provides a regularly shaped surface without abrading character. Such smooth, regular surface is favourable for obtaining a proper interference fit without cold welding effects upon press fitting the components. Preferably, the particles consist of glass material.

A further favourable effect of a shot peened surface is its oil retention capability. The shallow indentations provide some space for minute quantities of a lubricant such as oil, which at least partly stay in place while press fitting the components. Thus, a further reduction of friction forces is obtained, which even more renders the occurrence of cold welding unlikely.

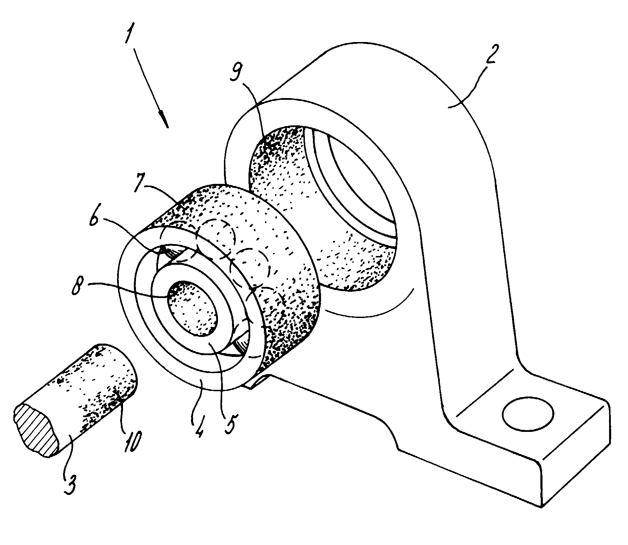

The invention will further be described with reference to an embodiment shown in the figure.

The figure shows a exploded view of a bearing system comprising a rolling element bearing 1, a seat 2 as well as a shaft 3 which, by means of rolling bearing 1, can be rotatably supported with respect to seat 2.

The rolling element bearing 1 has a outer ring 4, and a inner ring 5 enclosing a bearing space with rolling balls 6. The external surface 7 of the outer ring 4, as well as the internal surface 8 of the inner ring 5 have been treated by shot peening.

Also, the inner surface 9 of the housing of seat 2 has been shot peened, as well as part of the outer surface 10 of shaft 3.

Upon assembling these components, the respective shot peened surfaces 7, 9 and 8, 10 are press fitted in a known way. However, due to the presence of minor indentations in theses surfaces, caused by the shot peening process, cold welding phenomena will be reduced to a minimum, ad will have no effect on the press-in procedure.

## Claims

1. Bearing system, comprising a rolling element bearing and at least two construction parts which are rotatably supported with respect to one another by means of the bearing, said bearing having a inner ring, a outer ring and at least one series of rolling elements accommodated between the raceways of said rings, the outer bearing ring and the outer construction part on the one had, and/or the inner bearing ring and the inner construction part on the other hand being connected by means of mutual press fit surfaces, characterised in that the press fit surfaces have been treated by shot peening.

2. Bearing system according to claim 1, wherein the surface topography of each press fit surface treated by shot peening is characterised by surface deformations of about 1-6 micron.

3. Bearing system according to claim 1 or 2, wherein the surface topography of each press fit surface treated by shot peening is characterised by surface deformations of about 2-4 micron.

4. Bearing system according to claim 1, 2 or 3, wherein the surface topography of each press fit surface treated by shot peening is characterised by surface deformations of about 3 micron.

5. Rolling element bearing for a bearing system according to claim 1, 2, 3 or 4, said bearing comprising an inner ring, a outer ring and at least one series of rolling elements accommodated between the raceways of said rings, characterized in that at least one of the rings at its surface facing away from the raceway has been treated by shot peening.

6. Method for manufacturing a bearing ring for a rolling element bearing according to claim 5, wherein a surface of said bearing ring is shot peened by using globular, regularly shaped particles having a smooth surface.

7. Method according to claim 6, whereby ball shaped particles are used.

8. Method according to claim 6 or 7, whereby the particles consist of glass material.
